# EUROPÄISCHE PATENTSCHRIFT

(11) **EP 3 380 440 B1**
(45) Veröffentlichungstag und Bekanntmachung des Hinweises auf die Patenterteilung: **12.06.2019**
(21) Anmeldenummer: 16790559.5
(22) Anmeldetag: 28.10.2016
(51) Int. Cl.: C03B 23/035, C03B 23/025

(54) **ÜBERDRUCKUNTERSTÜTZTES SCHWERKRAFTBIEGEVERFAHREN UND HIERFÜR GEEIGNETE VORRICHTUNG**
POSITIVE PRESSURE ASSISTED GRAVITY BENDING METHOD AND DEVICE SUITED FOR CARRYING OUT THIS METHOD
PROCEDE DE CINTRAGE PAR GRAVITE ASSISTE PAR SURPRESSION ET DISPOSITIF ADAPTE

(30) Priorität: 25.11.2015 EP 15196183
(43) Veröffentlichungstag der Anmeldung: 03.10.2018
(73) Patentinhaber: Saint-Gobain Glass France, 92400 Courbevoie (FR)
(72) Erfinder: LE NY, Jean-Marie, 4851 Gemmenich (BE); BALDUIN, Michael, 52477 Alsdorf (DE); SCHALL, Günther, 52372 Kreuzau (DE); SCHMIDT, Lothar, 52074 Aachen (DE)
(74) Vertreter: Feist, Florian Arno
(86) Internationale Anmeldenummer: PCT/EP2016/076072
(87) Internationale Veröffentlichungsnummer: WO 2017/089070

(56) Entgegenhaltungen:
- WO-A1-2012/118612
- WO-A1-2014/166793
- US-A- 5 769 919
- US-A1- 2007 157 671

## Beschreibung

Die Erfindung betrifft ein überdruckunterstütztes Schwerkraftbiegeverfahren für Glasscheiben, eine hierfür geeignete Vorrichtung sowie die Verwendung eines oberen Formgebungswerkzeugs zur Erzeugung eines Überdrucks in einem Schwerkraftbiegeverfahren.

Verglasungen für Kraftfahrzeuge weisen typischerweise eine Biegung auf. Eine verbreitetes Verfahren zum Biegen von Glasscheiben ist das sogenannte Schwerkraftbiegen (auch *gravity bending* oder *sag bending*). Dabei wird die im Ausgangszustand plane Glasscheibe auf der Auflagefläche einer Biegeform angeordnet. Die Scheibe wird dann auf mindestens ihre Erweichungstemperatur erwärmt, so dass sie sich unter dem Einfluss der Schwerkraft an die Auflagefläche anlegt. Durch die Ausgestaltung der Auflagefläche kann so die Form der Glasscheibe beeinflusst werden. Durch das Schwerkraftbiegen kann die endgültige Biegung erreicht werden. Ein solches Verfahren ist beispielsweise aus GB 813069 A bekannt. Bei komplexeren Scheibenformen kommen jedoch häufig mehrstufige Biegeverfahren zum Einsatz. Typischerweise wird in einem ersten Biegeschritt mittels Schwerkraftbiegen eine Vorbiegung erzeugt, während die endgültige Form in einem zweiten Biegeschrift - häufig mittels Pressbiegen zwischen zwei komplementären Biegeformen - erzeugt wird. Solche mehrstufige Biegeverfahren sind beispielsweise aus EP 1 836 136 B1, US 2004107729 A1, EP 0531152 A2 und EP 1371616 A1 bekannt.

Zu den Nachteilen klassischer Schwerkraftbiegeverfahren zählen hohe Biegetemperaturen um die Glasscheiben wirksam zu erweichen, und lange Biegezeiten, bis die Scheiben ihre gewünschte Form eingenommen haben. Beides führt zu erhöhten Produktionskosten. Außerdem kann es bei komplexeren mehrstufigen Biegeverfahren, bei denen die Glasscheibe nach dem Schwerkraftbiegen von der Schwerkraftbiegeform an eine andere, stärker gebogene untere Biegeform übergeben wird, zu Biegefehlern kommen: direkt nach der Übergabe liegt die Glasscheibe nur an drei oder vier Punkten auf der neuen Biegeform auf, bevor sie die neue Form angenommen hat, wobei es durch die hohe Belastung an diesen Punkten zu einer unerwünschten Biegung in die Gegenrichtung kommen kann (sogenanntes *Counterbending* oder *Crossbending*).

Die EP 0 706 978 A2 offenbart ein Schwerkraftbiegeverfahren, welches durch Überdruck unterstützt wird. Dabei wird die zu biegende Scheibe zwischen der unteren Schwerkraftbiegeform und einem oberen Formgebungswerkzeug angeordnet. Durch das obere Formgebungswerkzeug wird ein Überdruck auf der oberen Glasoberfläche erzeugt, wodurch die Formung der Scheibe in der Schwerkraftbiegeform beschleunigt wird. Das obere Formgebungswerkzeug kann eine vollflächige oder eine rahmenartige periphere Kontaktfläche aufweisen. Das Formgebungswerkzeug kann direkt mit der Glasscheibe in Kontakt gebracht werden ("hard seal") oder leicht oberhalb der Glasscheibe positioniert werden ("soft seal").

Die genannte EP 0 706 978 A2 offenbart auch die Möglichkeit, auf der Glasscheibe eine inhomogene Druckverteilung zu erzeugen, wobei Bereiche der Scheibe mit einem höheren und andere Bereich der Scheibe mit einem geringeren Überdruck beaufschlagt werden. Hierzu wird das Formgebungswerkzeug in verschiedene, voneinander getrennte Teilräume unterteilt, die jeweils über eine eigene Gaszuleitung verfügen. Aufgrund der Vielzahl unabhängiger Gaszuleitungen ist ein solches Werkzeug aufwendig in Herstellung und Wartung.

Weitere Überdruck-unterstützte Biegeverfahren sind beispielsweise aus WO 2012/ 118612 A1 und US 2007/157671 A1 bekannt.

Die WO 2014/166793 A1 offenbart ein stahlhaltiges Gewebe zur Polsterung von Glasbiegewerkzeugen.

Der vorliegenden Erfindung liegt die Aufgabe zugrunde, ein weiter verbessertes Schwerkraftbiegeverfahren und eine dafür geeignete Vorrichtung bereitzustellen. Insbesondere soll eine inhomogene Druckverteilung zur Unterstützung des Schwerkraftbiegens mit Mitteln erzeugt werden, die einfacher herzustellen und zu warten sind als die bekannten Lösungen.

Die Aufgabe der Erfindung wird erfindungsgemäß durch eine Vorrichtung zum Biegen von mindestens einer Glasscheibe gelöst, mindestens umfassend
- eine Schwerkraftbiegeform mit einer Auflagefläche, die dazu geeignet ist, mindestens eine Glasscheibe darauf anzuordnen,
- ein oberes Formgebungswerkzeug gegenüberliegend der Auflagefläche angeordnet, das dazu geeignet ist, einen Überdruck auf der von der Auflagefläche abgewandten Oberfläche der auf der Auflagefläche angeordneten mindestens einen Glasscheibe zu erzeugen,
wobei das Formgebungswerkzeug eine Abdeckung aufweist, welche einen in Richtung der Schwerkraftbiegeform geöffneten Hohlraum ausbildet, und mit Mitteln ausgestattet ist, ein Gas in den Hohlraum einzuleiten, um den Überdruck zu erzeugen.

Der Hohlraum ist durch mindestens eine Trennwand in mindestens zwei Teilräume unterteilt, so dass in mindestens zwei Bereichen der Oberfläche der Glasscheibe ein unterschiedlicher Druck erzeugt werden kann. Das Formgebungswerkzeug ist mit einer gemeinsamen Gaszuleitung ausgestattet, bis zu der sich die Trennwand erstreckt.

Die Aufgabe der Erfindung wird außerdem gelöst durch ein Verfahren zum Biegen mindestens einer Glasscheibe, mindestens umfassend die folgenden Verfahrensschritte:
(a) Anordnen mindestens einer Glasscheibe auf einer Auflagefläche einer Schwerkraftbiegeform,
(b) Erwärmen der Glasscheibe auf mindestens ihre Erweichungstemperatur,
(c) Erzeugen eines Überdrucks auf der von der Auflagefläche abgewandten Oberfläche der mindestens einen Glasscheibe mittels eines oberes Formgebungswerkzeugs, das eine Abdeckung aufweist, welche einen in Richtung der Schwerkraftbiegeform geöffneten Hohlraum ausbildet, wobei der Überdruck erzeugt wird, indem ein Gas in den Hohlraum eingeleitet wird, wobei der Hohlraum durch mindestens eine Trennwand in mindestens zwei Teilräume unterteilt ist, welche sich bis zu einer gemeinsamen Gaszuleitung des Formgebungswerkzeug erstreckt, so dass in mindestens zwei Bereichen der Oberfläche ein unterschiedlicher Druck erzeugt wird, und
(d) Abkühlen der Glasscheibe (I).

Die Vorrichtung und das Verfahren werden im Folgenden gemeinsam vorgestellt, wobei sich Erläuterungen und bevorzugte Ausgestaltungen gleichermaßen auf Vorrichtung und Verfahren beziehen.

Das mit der erfindungsgemäßen Vorrichtung durchzuführende Biegeverfahren kann als überdruckunterstütztes Schwerkraftbiegen bezeichnet werden. Wie bei einem herkömmlichen Schwerkraftbiegeverfahren wirkt die Schwerkraft auf die erweichte Glasscheibe, die sich infolgedessen an die Biegeform anlegt. Dieser Vorgang wird aber dadurch unterstützt, dass die Glasscheibe mit einem Überdruck beaufschlagt wird. Durch den Überdruck wird die erweichte Glasscheibe gleichsam in die Biegeform hineingedrückt, wodurch die Schwerkraftwirkung unterstützt wird. Dadurch wird zum einen die Verformung beschleunigt, so dass die gewünschte Form der Glasscheibe schneller erreicht ist. Zum anderen kann schon bei geringeren Temperaturen eine hinreichende Verformung erreicht werden. Somit können die Produktionskosten gesenkt und Zykluszeiten verkürzt werden.

Die Erfindung ermöglicht es, eine inhomogene Druckverteilung auf die Glasoberfläche zu erzeugen. Dadurch kann in ausgewählten Bereichen der Glasscheibe eine stärkere Biegung erzeugt werden als in anderen Bereichen. Dadurch wird die Flexibilität des Biegeverfahrens gesteigert und es können komplexere Scheibenformen erreicht werden. Das sind große Vorteile der vorliegenden Erfindung.

Die erfindungsgemäße Vorrichtung zum Biegen von mindestens einer Glasscheibe umfasst mindestens eine untere Schwerkraftbiegeform und ein oberes Formgebungswerkzeug. Die zu biegende Glasscheibe wird auf der Schwerkraftbiegeform abgelegt und zwischen der Schwerkraftbiegeform und dem oberen Formgebungswerkzeug angeordnet.

Die Erfindung umfasst auch eine Anordnung zum Biegen mindestens einer Glasscheibe, umfassend die erfindungsgemäße Vorrichtung und eine auf der Auflagefläche der Schwerkraftbiegeform angeordnete Glasscheibe.

Der Überdruck auf der Glasoberfläche wird durch einen Gasstrom erzeugt, der mittels des oberen Formgebungswerkzeugs auf die Glasoberfläche geleitet wird. Das Gas tritt über eine Gaszuleitung (oder Einströmrohr) in den Hohlraum des Formgebungswerkzeugs ein. Durch die der Schwerkraftbiegeform zugewandte Öffnung des Hohlraums tritt das Gas wieder aus diesem aus und wird auf die Glasoberfläche geleitet. Die Trennwand verläuft von der Gaszuleitung durch den Hohlraum bis in den Bereich der Öffnung und unterteilt den Hohlraum in mindestens zwei Teilräume. Anders ausgedrückt teilt die Trennwand den Gasstrom durch den Hohlraum in zwei oder mehrere Teilströme. Die Trennwand kann sich bis in die Gaszuleitung hinein erstrecken oder auch direkt vor ihr oder kurz vor ihr enden. Durch eine geeignete Dimensionierung der jeweiligen Eintritts- und Austrittsquerschnitte wird die jeweilige Stärke der Teilströme unterschiedlich eingestellt, so dass verschiedene Bereiche der Glasoberfläche mit einem unterschiedlichen Gasstrom beaufschlagt werden.

Dadurch, dass sich die mindestens eine Trennwand bis zur Gaszuleitung erstreckt, unterteilt sie den Querschnitt dieser Gaszuleitung in mindestens zwei Teilquerschnitte: einen ersten Zuleitungsteilquerschnitt und eine zweiten Zuleitungsteilquerschnitt. Das aus der Gaszuleitung strömende Gas im ersten Teilquerschnitt wird in den ersten Teilraum des Hohlraums des Formgebungswerkzeugs geleitet, Gas im zweiten Teilquerschnitt in den zweiten Teilraum.

Der Gasaustrittsquerschnitt des Hohlraums wird durch die Öffnung in Richtung der Schwerkraftbiegeform festgelegt und entspricht in der Regel dieser Öffnung. Die mindestens eine Trennwand unterteilt auch diesen Gasaustrittsquerschnitt in mindestens zwei Teilquerschnitte: einen ersten Austrittsteilquerschnitt und eine zweiten Austrittsteilquerschnitt. Gas aus dem ersten Teilraum wird durch den ersten Austrittsteilquerschnitt geleitet und Gas aus dem zweiten Teilraum durch den zweiten Austrittsteilquerschnitt. Das Verhältnis vom ersten Zuleitungsteilquerschnitt zum zweiten Zuleitungsteilquerschnitt ist unterschiedlich vom Verhältnis vom ersten Austrittsteilquerschnitt zum zweiten Austrittsteilquerschnitt. Dadurch wird in einen der Teilräume eine gemessen am Austrittquerschnitt überproportionale Menge an Gas eingeleitet, wodurch in diesem Teilraum ein stärkerer Gasstrom erzeugt wird, welcher wiederum im zugeordneten Bereich der Glasoberfläche einen höheren Überdruck erzeugt.

Unter einem Überdruck wird im Sinne der Erfindung ein Druck verstanden, welcher höher ist als der Umgebungsdruck. Das Formgebungswerkzeug kann durch mehrere Trennwände mehrere Teilräume aufweisen. Verschiedene Teilräume können den gleichen Überdruck erzeugen, solange mindestens einer der Teilräume einen davon verschiedenen Überdruck erzeugt. Ein verschiedener Überdruck äußert sich insbesondere in einem verschieden starken Gasstrom.

In einer vorteilhaften Ausgestaltung ist die mindestens eine Trennwand so angeordnet, dass im Bereich mindestens einer Ecke der Glasscheibe ein höherer Druck erzeugt wird als im Zentralbereich der Glasscheibe. Dadurch können komplexe Scheibenformen realisiert werden, die typischerweise gerade im Bereich der Ecken starke Biegungen aufweisen. Außerdem kann dem Phanomen des "Gegenbiegens" (*counter bending*) entgegengewirkt werden: wird die Glasscheibe nach dem Schwerkraftbiegen auf eine weitere untere Biegeform übergeben, so liegt sie zunächst nur an wenigen Punkten, typischerweise im Bereich der Ecken, auf der Auflagefläche der neuen Form auf, bevor sie in einem weiteren Biegeschritt deren Form angenommen hat. Die starke Belastung an den Auflagepunkten kann zu einer unerwünschten Biegung führen, typischerweise entgegen der gewollten Biegungsrichtung. Durch den stärkeren Überdruck beim Schwerkraftbiegen im Bereich der Ecken können diese mit einer übermäßigen Biegung versehen werden, welche durch das an sich unerwünschte Gegenbiegen kompensiert wird, wodurch sich die eigentlich gewünschte Biegung ergibt. Bevorzugt werden die Bereiche von zwei benachbarten Ecken mit dem höheren Druck beaufschlagt, beispielsweise die beiden Ecken der Oberkante oder die beiden Ecken der Unterkante. Die Bezeichnungen Oberkante und Unterkante beziehen sich dabei auf die beabsichtigte Einbaulage der Glasscheibe. Es können auch die Bereiche aller vier Ecken mit dem höheren Druck beaufschlagt werden.

In einem ersten Bereich der Glasoberfläche wird ein höherer Druck erzeugt als in einem zweiten Bereich. In einer vorteilhaften Ausführung des Verfahrens wird im ersten Bereich ein Druck von 0 mbar bis 15 mbar erzeugt, bevorzugt von 2 mbar bis 10 mbar, und im zweiten Bereich der Glasoberfläche ein Druck von 15 mbar bis 30 mbar, bevorzugt von 20 mbar bis 25 mbar. Damit werden gute Ergebnisse erzielt.

In einer besonders vorteilhaften Ausführung enthält der besagte erste Bereich die Scheibenmitte und der besagte zweite Bereich mindestens eine Scheibenecke. Bevorzugt existieren mindestens zwei zweite Bereiche, von denen jeder eine von zwei benachbarten Ecken enthält, beispielsweise die Ecken der Oberkante oder der Unterkante oder sämtliche Ecken. Es können auch zwei benachbarte Ecken dem zweiten Bereich und die beiden übrigen benachbarten Ecken einem dritten Bereich zugeordnet sein, welcher einen dritten Druck erzeugt.

Die Schwerkraftbiegeform weist eine Auflagefläche auf, die dazu geeignet ist, mindestens eine Glasscheibe darauf anzuordnen. Die Auflagefläche legt die Form der gebogenen Glasscheibe fest. Wird die Glasscheibe auf mindestens ihre Erweichungstemperatur erhitzt, so legt sie sich unter dem Einfluss der Schwerkraft an die Auflagefläche an, wodurch die gewünschte Form erreicht wird. Eine Schwerkraftbiegeform ist eine sogenannte untere Form, auf die die Scheibe abgelegt werden kann, so dass die Auflagefläche die untere, dem Erdboden zugewandte Oberfläche der Glasscheibe berührt. Üblicherweise steht der Randbereich der Glasscheibe umlaufend über die Auflagefläche über.

Die vorliegende Erfindung ist nicht auf eine bestimmte Art von Schwerkraftbiegeform beschränkt. Die Auflagefläche ist bevorzugt konkav ausgebildet. Unter einer konkaven Form wird dabei eine Form verstanden, bei der die Ecken und Ränder der Glasscheibe im bestimmungsgemäßen Kontakt mit der Auflagefläche in Richtung von der Biegeform weg gebogen sind.

Die Auflagefläche kann beispielsweise vollflächig ausgebildet sein und vollflächig mit der Glasscheibe in Kontakt gebracht werden. In einer bevorzugten Ausgestaltung weist die Schwerkraftbiegeform aber eine rahmenartige Auflagefläche auf. Lediglich die rahmenartige Auflagefläche steht mit der Glasscheibe in direktem Kontakt, während der größte Teil der Scheibe keinen direkten Kontakt zum Werkzeug hat. Dadurch lassen sich Scheiben mit besonders hoher optische Qualität erzeugen. Ein solches Werkzeug kann auch als Ring (Biegering) oder Rahmen (Rahmenform) bezeichnet werden. Der Begriff "rahmenartige Auflagefläche" im Sinne der Erfindung dient lediglich zur Abgrenzung des erfindungsgemäßen Werkzeugs von einer vollflächigen Form. Die Auflagefläche muss keinen vollständigen Rahmen bilden, sondern kann auch unterbrochen sein. Die Auflagefläche ist in Form eines vollständigen oder unterbrochenen Rahmens ausgebildet.

Die Breite der rahmenförmigen Auflagefläche beträgt bevorzugt von 0,1 cm bis 20cm, besonders bevorzugt von 0,1 cm bis 5 cm, beispielsweise 0,3 cm.

Die von der Schwerkraftbiegeform abgewandte Oberfläche der Glasscheibe wird erfindungsgemäß mit dem Überdruck beaufschlagt. Die von der Schwerkraftbiegeform abgewandte Oberfläche der Glasscheibe kann auch als obere Oberfläche bezeichnet werden, und die der Schwerkraftbiegeform zugewandte Oberfläche als untere Oberfläche.

In einer vorteilhaften Ausgestaltung kann die Schwerkraftbiegeform vertikal gegenüber einer zweiten unteren Form bewegt werden, um die Glasscheibe zwischen der Schwerkraftbiegeform und der zweiten unteren Form zu übergeben. Die Schwerkraftbiegeform und die zweite untere Form sind insbesondere Teil eines mehrteiligen Biegewerkzeugs. Bevorzugt ist die zweite untere Form ebenfalls rahmenartig und konkav. Die Schwerkraftbiegeform kann innerhalb der zweiten unteren Form angeordnet sein. Damit ist gemeint, dass die Auflagefläche der zweiten unteren Form einen größeren Umfang umschreibt als die Auflagefläche der Schwerkraftbiegeform und einen größeren Abstand zur Mitte des mehrteiligen Biegewerkzeugs hat - die zweite untere Form umgibt also die Schwerkraftbiegeform. Alternativ kann aber auch die zweite untere Form innerhalb der Schwerkraftbiegeform angeordnet sein. Die Schwerkraftform ist vertikal gegenüber der zweiten unteren Form bewegbar, um die Glasscheibe zwischen der Schwerkraftbiegeform und der zweiten unteren Form zu übergeben. Während des Schwerkraftbiegeprozesses ist die Schwerkraftbiegeform oberhalb der zweiten unteren Form angeordnet und die Scheibe liegt auf der Auflagefläche der Schwerkraftbiegeform auf. Anschließend wird die Schwerkraftbiegeform vertikal gegenüber der zweiten unteren Form nach unten bewegt. Wichtig ist dabei die Relativbewegung der beiden Formen gegeneinander, wobei die tatsächliche physische Bewegung von der Schwerkraftbiegeform (nach unten), der zweiten unteren Form (nach oben) oder beiden erfolgen kann. Sobald die Auflagefläche der Schwerkraftbiegeform unterhalb der Auflagefläche der zweiten unteren Form angeordnet ist, liegt die Glasscheibe auf der Auflagefläche der zweiten unteren Form auf und die Auflagefläche der Schwerkraftbiegeform ist frei. So wird die Glasscheibe von der Schwerkraftbiegeform auf die zweite untere Form übergeben. Die zweite untere Form ist in einer vorteilhaften Ausgestaltung ebenfalls eine Schwerkraftbiegeform, jedoch mit stärkerer Krümmung als die erste Schwerkraftbiegeform.

Sinnvollerweise weist die Auflagefläche der zweiten unteren Form eine andere Geometrie, insbesondere Krümmung auf als die Auflagefläche der Schwerkraftbiegeform. Die zweite untere Form ist für einen weiteren Biegeschritt vorgesehen, in dem eine komplexere, typischerweise stärker gekrümmte Scheibenform erreicht wird. Da im Moment der Übergabe die Glasscheibe die durch die Schwerkraftbiegeform festgelegte Biegung aufweist, liegt sie nach der Übergabe nur an wenigen Punkten auf der zweiten unteren Form auf, typischerweise im Bereich der Scheibenecken. Erst während des anschließenden Biegeschritts nimmt die Glasscheibe die durch die Auflagefläche der zweiten unteren Form festgelegte Biegung an und liegt dann auf der gesamten Auflagefläche auf. Die starke Belastung an den Auflagepunkten nach der Übergabe kann zu unerwünschten Biegungen führen. Typischerweise ist die Oberseite der Glasscheibe die konkave Seite. Der punktuelle Druck von unten führt dann zu einer Biegung entgegen dieser grundsätzlichen Biegungsrichtung und kann lokal eine konvexe Biegung der Oberseite erzeugen oder zumindest der gewünschten Vorbiegung entgegenwirken. Man spricht in diesem Zusammenhang von Gegenbiegen (*counter bending* oder *cross bending*). Dieser Effekt kann durch das erfindungsgemäße obere Formgebungswerkzeug kompensiert werden, indem die vom Gegenbiegen betroffenen Bereiche, typischerweise die Eckbereiche, beim Schwerkraftbiegen mit einem stärkeren Überdruck beaufschlagt werden und folglich stärker gebogen werden. Man kann so lokal eine Biegung erzeugen, die stärker ist als die eigentlich gewünschte Vorbiegung, was durch das Gegenbiegen nach der Übergabe wieder kompensiert wird.

Das obere Formgebungswerkzeug ist während des Biegevorgangs gegenüberliegend der Auflagefläche der Schwerkraftbiegeform angeordnet, so dass eine Glasscheibe zwischen der Schwerkraftbiegeform und dem Formgebungswerkzeug angeordnet werden kann. Es ist dazu geeignet, einen Überdruck auf der von der Auflagefläche abgewandten Oberfläche der auf der Auflagefläche angeordneten Glasscheibe zu erzeugen. Das Formgebungswerkzeug ist nicht als Form mit vollflächiger Kontaktfläche, sondern als Hohlform ausgebildet. Das Formgebungswerkzeug weist eine Abdeckung auf, beispielsweise gefertigt aus einem Metallblech. Die Abdeckung ist so geformt, dass sie einen Hohlraum ausbildet. Der Hohlraum ist kein abgeschlossener Hohlraum, sondern weist eine großflächige Öffnung auf, die der Schwerkraftbiegeform zugewandt ist. Man kann das Werkzeug auch als glockenartig oder haubenartig bezeichnen.

Die erfindungsgemäße Vorrichtung erfasst außerdem Mittel, um die Schwerkraftbiegeform und das Formgebungswerkzeug gegeneinander zu bewegen. Dadurch werden die Schwerkraftbiegeform und das Formgebungswerkzeug, nachdem die Glasscheibe auf die Schwerkraftbiegeform aufgelegt worden ist, einander angenähert, so dass das Formgebungswerkzeug mit der Glasscheibe in Kontakt gebracht wird. Die Annäherung kann durch Bewegung der Schwerkraftbiegeform, des Formgebungswerkzeugs oder beidem erfolgen. In einer bevorzugten Ausführung wird das Formgebungswerkzeug bewegt und auf die Glasscheibe abgesenkt, während die Schwerkraftbiegeform keine Vertikalbewegung ausführt.

Die erfindungsgemäße Vorrichtung erfasst außerdem Mittel zum Heizen der Glasscheibe auf Erweichungstemperatur. Typischerweise sind die Schwerkraftbiegeform und das obere Formgebungswerkzeug innerhalb eines beheizbaren Biegeofens oder einer beheizbaren Biegekammer angeordnet. Die Glasscheibe kann zum Erwärmen eine gesonderte Kammer durchlaufen, beispielsweise einen Tunnelofen.

Der Überdruck wird erzeugt, indem ein Gas in den Hohlraum des Formgebungswerkzeugs eingeleitet wird. Das Formgebungswerkzeug ist dazu mit Mitteln ausgestattet ist, ein Gas in den Hohlraum einzuleiten, um den Überdruck zu erzeugen. Dazu ist bevorzugt ein Rohr (Einströmrohr) als Gaszuleitung in die Abdeckung eingelassen, welches aus der äußeren Umgebung in den Hohlraum führt. Über das Rohr wird das Gas in den Hohlraum eingeleitet. Das Gas ist in einer bevorzugten Ausführung Luft, insbesondere Druckluft, weil diese kostengünstig zu erzeugen ist. Es können aber prinzipiell auch andere Gase verwendet werden, beispielsweise Kohlendioxid oder Stickstoff. Die Luft kann auf beliebige Weise durch das Rohr in den Hohlraum befördert werden, beispielsweise durch Venturi-Düsen oder einen Ventilator.

Das einströmende Gas ist bevorzugt erwärmt, um die Glasscheibe beim Biegeprozess, der typischerweise bei erhöhten Temperaturen stattfindet, nicht abzukühlen. Die Temperatur des Gases entspricht bevorzugt in etwa der Temperatur der Glasscheibe.

Im Hohlraum kann ein Prallblech gegenüberliegend dem Rohrauslass angeordnet sein, insbesondere in dem Teilraum des Hohlraums, der direkt unter dem Rohrauslass liegt, so dass der Gasstrom direkt auf die Glasoberfläche treffen würde. Stattdessen trifft das einströmende Gas dann auf das Prallblech. Dadurch wird verhindert, dass einströmendes Gas direkt auf die Glasscheibe trifft und es kann im gesamten Teilraum, beziehungsweise auf dem gesamten ihm zugeordneten Oberflächenbereich der Glasscheibe, ein homogener Überdruck erzeugt werden.

Die Abdeckung weist bevorzugt eine Materialstärke von höchstens 5 mm auf, besonders bevorzugt von 2 mm bis 4 mm. Durch diese geringen Materialstärken kann das Gewicht des Formgebungswerkzeugs gering gehalten werden. Die Abdeckung besteht bevorzugt aus Stahl oder Edelstahl.

Das Formgebungswerkzeug kann direkt mit der oberen Oberfläche der Scheibe in Kontakt gebracht werden oder ohne direkten Kontakt in geeignet geringem Abstand oberhalb der Glasscheibe positioniert werden.

In einer vorteilhaften Ausgestaltung wird das Formgebungswerkzeug mittels einer Dichtlippe mit der Glasscheibe in Kontakt gebracht. Durch die Dichtlippe kann eine schlüssige Verbindung zwischen Formgebungswerkzeug und Glasscheibe hergestellt werden, wodurch ein höherer Überdruck erzeugt werden kann. Dadurch wird eine höhere Effizienz des Glasbiegeverfahrens erreicht. Durch die Dichtlippe wird zudem die Gefahr von Schädigungen am Glas verringert gegenüber einer direkten Kontaktierung des metallenen Formgebungswerkzeugs mit der Glasscheibe.

Das Formgebungswerkzeug ist in dieser vorteilhaften Ausgestaltung mit mindestens einer Dichtlippe ausgestattet. Die Dichtlippe dient der Kontaktierung mit der oberen Oberfläche der zu biegenden Glasscheibe. Die Dichtlippe ist auf einem umlaufenden Randabschnitt der Abdeckung angeordnet, insbesondere auf der dem Hohlraum zugewandten Oberfläche des Randabschnitts. Der Hohlraum des Formgebungswerkzeug, welcher erfindungsgemäß zum Schwerkraftbiegewerkzeug und zur Glasscheibe hin geöffnet ist, wird durch die Glasscheibe über die Dichtlippe gleichsam verschlossen, so dass wirkungsvoll ein Überdruck im Hohlraum und auf der oberen Oberfläche der Glasscheibe erzeugt werden kann. Mit Randabschnitt wird ein dem Rand zugeordneter Bereich der Abdeckung bezeichnet, wobei die Dichtlippe typischerweise einen Abstand zur Seitenkante der Abdeckung aufweist.

Die Dichtlippe berührt die Glasscheibe umlaufend in ihrem Randbereich, so dass auf dem Großteil der oberen Oberfläche der erfindungsgemäße Überdruck erzeugt werden kann. Der Kontaktbereich zwischen der Dichtlippe und der Oberfläche der Glasscheibe weist bevorzugt einen Abstand von höchstens 20 cm zur Seitenkante der Glasscheibe auf, besonders bevorzugt höchstens 10 cm. Der Überdruck wird bevorzugt auf mindestens 80% der Oberfläche erzeugt, wobei die nicht mit Überdruck beaufschlagen Bereiche der Oberfläche in ihrem Randbereich angeordnet sind außerhalb des von der Dichtlippe umgebenen Bereichs.

Die Dichtlippe ist bevorzugt aus einem Filz oder Vlies gefertigt. Besonders bevorzugt ist in dem Filz oder Vlies ein Band angeordnet zur Beschwerung der Dichtlippe. So kann die Dichtlippe sicher mit der Glasoberfläche in Kontakt gehalten werden. Ein Filz- oder Vliesstreifen kann beispielsweise um das Band umgeschlagen werden. Der Filz oder das Vlies ist bevorzugt metallhaltig, besonders bevorzugt edelstahlhaltig. Der Filz oder das Vlies ist bevorzugt ein metallhaltiger Filz oder Metallvlies, besonders bevorzugt ein edelstahlhaltiger Filz oder Edelstahlvlies. Diese Materialien weisen einerseits eine für eine industrielle Massenfertigung ausreichende Stabilität auf und sind andererseits ausreichend weich, um die Glasoberfläche nicht zu beschädigen. Die Materialstärke des Filz oder Vlies beträgt bevorzugt von 0,1 mm bis 10 mm, besonders bevorzugt von 1 mm bis 5 mm.

Das Band (Beschwerungsband) enthält bevorzugt Glasfasern und/oder Metallfasern, besonders bevorzugt ein Glasfaser-Metallfaser-Gemisch. Die Dicke des Bandes beträgt bevorzugt von 1 mm bis 100 mm, besonders bevorzugt von 5 mm bis 30 mm.

Der Randabschnitt der Abdeckung, auf dem gegebenenfalls die Dichtlippe angeordnet ist, ist in einer vorteilhaften Ausgestaltung in bestimmungsgemäßer Anordnung des Formgebungswerkzeugs nach unten gerichtet. Der Randabschnitt ist bevorzugt im Wesentlichen vertikal angeordnet. Der nach unten gerichtete Randabschnitt wird häufig auch als Schürze bezeichnet. Die Seitenkante der Abdeckung kann am Ende des nach unten gerichteten Randabschnitts angeordnet sein und nach unten weisen. Es beeinträchtigt die Funktion aber nicht, wenn beispielsweise das Ende des Randabschnitts umgebogen ist, so dass die Seitenkante nicht nach unten weist.

In einer vorteilhaften Ausgestaltung der Erfindung ist die Vorrichtung so bemessen und konfiguriert, dass der besagte Randabschnitt der Abdeckung, oder zumindest dessen nach unten gerichteter Teil, beim Biegen vollständig oberhalb der Oberfläche der zu biegenden Glasscheibe angeordnet ist. In diesem Fall ist die Ausdehnung der Gasaustrittsöffnung bevorzugt geringer als die Ausdehnung der Glasoberfläche, so dass der gesamte Gasstrom zur Erzeugung des Überdrucks zur Verfügung steht, was im Hinblick auf die Effizienz vorteilhaft ist. Wird die Glasoberfläche direkt kontaktiert (durch die Abdeckung selbst oder eine Dichtlippe), so wirkt die den Hohlraum abdichtende Kraft direkt auf die Glasoberfläche, was ebenfalls für die Effizienz vorteilhaft ist.

In einer weiteren vorteilhaften Ausgestaltung der Erfindung ist die Vorrichtung so bemessen und konfiguriert, dass der Randabschnitt die zu biegende Glasscheibe beim Biegen umgibt. Der Randabschnitt (die "Schürze") überlappt also gleichsam die Glasscheibe, so dass die Glasscheibe - zumindest in ihrem planen Ausgangszustand - vollständig innerhalb des Hohlraums des Formgebungswerkzeugs angeordnet ist. Der Vorteil liegt darin, dass das Formgebungswerkzeug nicht auf die Größe der zu biegenden Glasscheibe angepasst sein muss, sondern dass verschiedene Glasscheiben unterschiedlicher Größe mit demselben Werkzeug bearbeitet werden können, solange die Glasscheibe in den Hohlraum passt.

Ein Vorteil der Erfindung ist, dass durch die Überdruck-Unterstützung die gewünschte Scheibenform schneller erreicht werden kann als beim herkömmlichen Schwerkraftbiegen. Dadurch können in der industriellen Massenfertigung kürzere Taktzeiten realisiert werden.

Der Überdruck wird in einer vorteilhaften Ausführung über einen Zeitraum von höchstens 100 Sekunden auf der oberen Oberfläche der Glasscheibe erzeugt, bevorzugt höchstens 60 Sekunden, besonders bevorzugt höchstens 30 Sekunden. Der Zeitraum, über den der Überdruck auf der Oberfläche erzeugt wird, kann beispielsweise von 5 Sekunden bis 30 Sekunden betragen.

Ein weiterer Vorteil der Erfindung ist, dass die Biegung durch die Überdruck-Unterstützung bei geringeren Temperaturen erreicht werden kann als beim herkömmlichen Schwerkraftbiegen. Dadurch kann Energie eingespart werden, weil die Biegekammer weniger stark beheizt werden muss. Kalk-Natron-Glas, dem typischen Glas für Fensterscheiben, wird üblicherweise bei etwa 630 °C gebogen. Durch die erfindungsgemäße Überdruck-Unterstützung kann bereits bei geringeren Temperauren, beispielsweise 610 °C mit ausreichender Geschwindigkeit gebogen werden. Die Maximaltemperatur, auf die die Glasscheibe erwärmt wird, beträgt daher in einer vorteilhaften Ausführung kleiner 630 °C, bevorzugt kleiner 620 °C, wenn die Glasscheibe Kalk-Natron-Glas enthält oder daraus besteht.

Die zu biegende Glasscheibe kann aber auch andere Glassorten wie Borsilikatglas oder Quarzglas enthalten. Die Dicke der Glasscheibe beträgt typischerweise von 0,2 mm bis 10 mm, bevorzugt 0,5 mm bis 5 mm.

Die Abfolge der Verfahrensschritte ist nicht so zu interpretieren, dass erst dann Maßnahmen zur Erzeugung des Überdrucks getroffen werden, wenn die Erweichungstemperatur überschritten ist. Vielmehr kann die Glasscheibe auch schon während des Erwärmens mit dem Überdruck beaufschlagt werden. Der Überdruck kann seine Wirkung zwar erst nach Erreichen der Erweichungstemperatur entfalten, aus verfahrenstechnischen Gründen kann es aber einfacher sein, den Überdruck kontinuierlich zu erzeugen.

Das erfindungsgemäße überdruckunterstützte Schwerkraftbiegen kann der einzige Biegeschritt sein oder auch Teil eines mehrstufigen Biegeverfahrens, bei dem weitere Biegeschritte vorausgehen oder nachfolgen. Beispielsweise können zwischen dem überdruckunterstützte Schwerkraftbiegen und dem Abkühlen der Glasscheibe weitere Biegeschritte erfolgen, beispielsweise mittels Schwerkraftbiegen, Pressbiegen oder Saugbiegen. Die Glasscheibe kann hierfür von der erfindungsgemäßen Schwerkraftbiegeform auf weitere Biegeformen übergeben werden.

Das Abkühlen der Glasscheibe kann auf der erfindungsgemäßen Schwerkraftbiegeform erfolgen oder auch auf einer weiteren Form, auf die die Scheibe übergeben wird. Das Abkühlen kann bei Umgebungstemperatur oder durch aktive Kühlung erfolgen.

Die erfindungsgemäße Schwerkraftbiegeform kann beweglich ausgebildet sein, beispielsweise auf einem Wagen gelagert. So kann die zu biegende Glasscheibe auf der Schwerkraftbiegeform unter das obere Formgebungswerkzeug transportiert werden. Die Schwerkraftbiegeform kann zum Erwärmen einen Ofen durchlaufen, wobei die Glasscheibe auf Biegetemperatur erwärmt oder zumindest vorgewärmt wird. Durch eine räumliche Trennung des Aufwärmens und des überdruckunterstützen Biegens in verschiedenen Kammern eines Biegeofens können höhere Taktzeiten erreicht werden, als wenn die Scheibe erst in der Biegekammer erwärmt wird. Typische Biegetemperaturen betragen von 500 °C bis 700 °C, bevorzugt von 550 °C bis 650 °C.

In einer besonders bevorzugten Weiterbildung des Verfahrens wird die Glasscheibe nach dem erfindungsgemäßen überdruckunterstützten Schwerkraftbiegen auf eine weitere untere Form übergeben. Diese Übergabe erfolgt bevorzugt mittels eines mehrteiligen Biegewerkzeugs, in dem die Scheibe durch relative Vertikalbewegung unterschiedlicher Biegeformen erfolgt, wie vorstehend beschrieben. Anschließend wird die Glasscheibe bevorzugt einem weiteren Biegeschritt unterzogen. Dies ist bevorzugt ein weiterer Schwerkraftbiegeschritt auf der zweiten unteren Form. Dabei wird die Glasscheibe bevorzugt wiederum erwärmt, um eine höhere Temperatur zu erreichen oder eine zwischenzeitliche Abkühlung zu kompensieren. Alternativ kann der weitere Biegeschritt aber auch ein Pressbiegeschritt zwischen der zweiten unteren Form und einer komplementären oberen Pressbiegeform sein.

In einer besonders vorteilhaften Ausgestaltung der Erfindung wird durch die zwei Schwerkraftbiegeschritte eine komplexe Vorbiegung der Glasscheibe erreicht, während die endgültige Scheibenform in einem anschließenden Pressbiegeschritt erreicht wird. So können besonders komplexe Scheibengeometrien realisiert werden. Ein besonders geeignetes Verfahren ist in EP 1836136 B1 beschrieben. Hier wird die Glasscheibe durch eine obere Form von der Schwerkraftbiegeform abgehoben, indem ihre Kante mit einem Luftstrom bestrichen wird. Anschließend wird die Glasscheibe zwischen dieser oberen Form und einer unteren Vollform angeordnet, die mit Löchern ausgebildet ist, mittels derer eine Saugwirkung auf die Glasscheibe ausgeübt wird.

Auch mehrere, beispielsweise zwei aufeinander liegende Glasscheiben können durch die erfindungsgemäße Vorrichtung und das erfindungsgemäße Verfahren simultan gebogen werden. Dies kann insbesondere gewünscht sein, wenn zwei Einzelscheiben später zu einem Verbundglas laminiert werden sollen, damit ihre Form optimal aufeinander abgestimmt ist. Die Glasscheiben werden dazu flächig aufeinander angeordnet und gemeinsam simultan kongruent gebogen. Zwischen den Glasscheiben wird ein Trennmittel angeordnet, beispielsweise ein Trennpuder oder ein Gewebe, so dass die Glasscheiben nach dem Biegen wieder voneinander gelöst werden können. In einer vorteilhaften Ausführung wird das Verfahren auf mehrere, insbesondere zwei aufeinander liegende Glasscheiben angewandt.

Die Erfindung umfasst außerdem die Verwendung eines oberen Formgebungswerkzeugs, das eine Abdeckung aufweist, welche einen in Richtung der Schwerkraftbiegeform geöffneten Hohlraum ausbildet, zur Unterstützung eines Schwerkraftbiegeprozesses, wobei mit dem Formgebungswerkzeug ein Überdruck auf der von einer Schwerkraftbiegeform abgewandten Oberfläche einer zu biegenden Glasscheibe erzeugt wird, indem ein Gas in den Hohlraum eingeleitet wird, wobei der Hohlraum durch mindestens eine Trennwand in mindestens zwei Teilräume unterteilt ist, welche sich bis zu einer gemeinsamen Gaszuleitung des Formgebungswerkzeug erstreckt, so dass in mindestens zwei Bereichen der Oberfläche ein unterschiedlicher Druck erzeugt wird.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: einen Querschnitt durch eine Ausgestaltung des erfindungsgemäßen oberen Formgebungswerkzeugs,
- Fig. 2: eine vergrößerte Darstellung des Ausschnitts Z aus Figur 1,
- Fig. 3: einen Querschnitt durch eine erfindungsgemäße Vorrichtung während einer Ausführungsform des erfindungsgemäßen Verfahrens,
- Fig. 4: einen Querschnitt durch eine weitere Ausgestaltung des erfindungsgemäßen oberen Formgebungswerkzeugs während des erfindungsgemäßen Verfahrens und
- Fig. 5: ein Flussdiagramm einer Ausführungsform des erfindungsgemäßen Verfahrens.

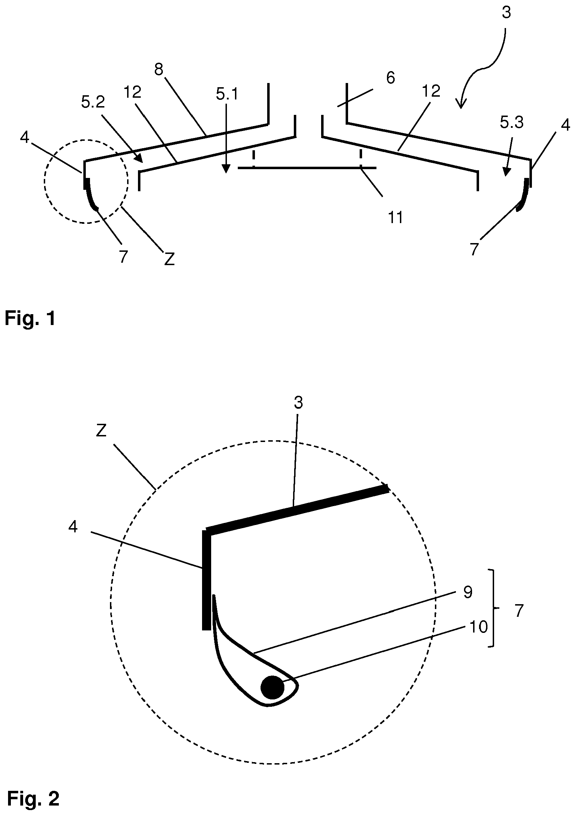

Figur 1 und Figur 2 zeigen je ein Detail eines erfindungsgemäßen Formgebungswerkzeugs 3. Das Formgebungswerkzeug 3 weist eine Abdeckung 8 auf, die aus einem nur 3 mm starken Stahlblech gebildet ist. Dadurch weist das Formgebungswerkzeug 3 nur ein geringes Gewicht auf. Die Abdeckung 8 bildet einen Hohlraum aus, der nach unten in Richtung der Glasscheibe geöffnet ist. Ein Randabschnitt 4 der Abdeckung 8 verläuft im Wesentlichen vertikal (eine sogenannte "Schürze").

Die Abdeckung 8 ist mittig mit einer Gaszuleitung 6 (Einströmrohr) ausgestattet, über das erwärmte Druckluft in den Hohlraum 5 einfließen kann, um einen Überdruck auf der Oberfläche einer Glasscheibe während eines Schwerkraftbiegeprozesses zu erzeugen. Das Formgebungswerkzeug 3 ist Trennwänden 12 ausgestattet, die den Hohlraum in Teilräume unterteilen. Dargestellt sind zwei Trennwände 12, welche den Hohlraum unterteilen in einen zentralen Teilraum 5.1 und zwei äußere Teilräume 5.2, 5.3. Der dargestellte Querschnitt verläuft in der Nähe einer Seitenkante des Formgebungswerkzeugs, die Teilräume 5.2 und 5.3 sind in den Ecken des Formgebungswerkzeugs angeordnet.

Die Trennwände 12 erstrecken sich bis in die Gaszuleitung 6 hinein und verlaufen von dort durch den Hohlraum bis in den Bereich von dessen Auslassöffnung. Der durch die Gaszuleitung 6 einströmende Gasstrom wird durch die Trennwände 12 aufgeteilt in Teilströme, die jeweils in einen Teilraum 5.1, 5.2, 5.3 einströmen. Durch geeignete Aufteilung der Einström- und Ausströmquerschnitte strömt überproportional viel Gas in die äußeren Teilräume 5.2, 5.3 ein, so dass durch diese Teilräume 5.2, 5.3 eine höherer Überdruck auf der Glasoberfläche erzeugt wird als durch den zentralen Teilraum 5.1. Die diesen Teilräumen 5.2, 5.3 zugeordneten Bereiche der Glasscheibe, nämlich die Eckbereiche, werden folglich stärker gebogen als der zentrale Bereich der Glasscheibe, der dem Teilraum 5.1 zugeordnet ist. So werden komplexe Scheibengeometrien ermöglicht. Der Querschnitt der Gaszuleitung 6 wird durch die Trennwände 12 in Teilquerschnitte unterteilt. Ebenso wird der Querschnitt der Öffnung des Hohlraums durch die Trennwände 12 in Teilquerschnitte unterteilt. Das jeweilige Verhältnis des Zuleitungsteilquerschnitt der äußeren Teilräume 5.2, 5.3 zum Zuleitungsteilquerschnitt des zentralen Teilraums 5.1 ist größer als das jeweilige Verhältnis der Austrittsteilquerschnitts der äußeren Teilräume 5.2, 5.3 zum Austrittsteilquerschnitts des zentralen Teilraums 5.1.

Der zentrale Teilraum 5.1 ist direkt unterhalb der Gaszuleitung 6 angeordnet, so dass einströmendes Gas direkt auf die Glasoberflächen treffen würde, was zu unerwünschten Biegeeffekten führen könnte. Um dies zu vermeiden und einen homogenen Überdruck im Teilraum 5.1 zu erzeugen, ist im Teilraum 5.1 der Öffnung des Einströmrohrs 6 gegenüberliegend ein Prallblech 11 angeordnet, auf das die einströmende Luft trifft.

Am Randabschnitt 4 ist eine Dichtlippe 7 angebracht, und zwar auf der dem Hohlraum zugewandten Seite. Die umlaufende Dichtlippe 7 ist aus einem Edelstahlvlies 9 gefertigt mit einer Materialstärke von 3 mm. Ein Streifen des Edelstahlvlieses 9 ist um eine Band 10 umgelegt, welches so innerhalb der Dichtlippe angeordnet ist und eine Beschwerung der Dichtlippe 7 bewirkt. Das Band 10 besteht aus einem Glasfaser-Metallfaser-Gemisch und weist einen etwa kreisförmigen Querschnitt mit einem Durchmesser von 20 mm auf. Eine solche Dichtlippe 7 stellt eine gute Abdichtung des Hohlraums sicher, ist ausreichend flexibel, um Beeinträchtigungen der Glasscheibe I zu vermeiden und ausreichend stabil, um industriell eingesetzt werden zu können.

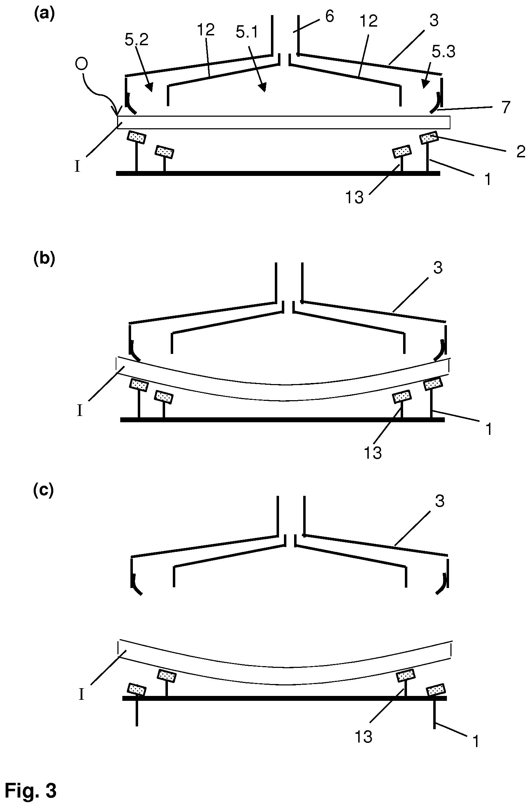

Figur 3 zeigt eine erfindungsgemäße Vorrichtung während des erfindungsgemäßen Verfahrens zum Biegen einer Glasscheibe I. Die im Ausgangszustand plane Glasscheibe I wird auf die rahmenartige, konkave Auflagefläche 2 einer Schwerkraftbiegeform 1 abgelegt (Fig. 3a). Wie beim Schwerkraftbiegen üblich wird die Glasscheibe I auf eine Biegetemperatur erwärmt, die mindestens der Erweichungstemperatur entspricht. Die erweichte Glasscheibe 1 schmiegt sich daraufhin unter dem Einfluss der Schwerkraft an die Auflagefläche 2 an (Fig. 3b).

Erfindungsgemäß wird das Schwerkraftbiegen durch das obere Formgebungswerkzeug 3 unterstützt, welches einen Überdruck auf der von der Auflagefläche 2 abgewandten, nach oben weisenden Oberfläche O der Glasscheibe I erzeugt. Das obere Formgebungswerkzeug 3 ist ein glocken- oder haubenartiges Werkzeug, das einen Hohlraum aufweist, der der Glasscheibe I zugewandt ist. Das obere Formgebungswerkzeug 3 steht mit der oberen Oberfläche O der Glasscheibe I über eine umlaufende Dichtlippe 7 in Kontakt, so dass die Glasscheibe 1 den Hohlraum verschließt. Durch in den Hohlraum einfließende Druckluft wird der Überdruck auf der Oberfläche O erzeugt. Der Hohlraum ist durch Trennwände 12 in Teilräume 5.1, 5.2, 5.3 unterteilt, wie vorstehend bei Figur 1 beschrieben.

Durch den Überdruck wird die Verformung der Glasscheibe 1 unter dem Einfluss der Schwerkraft unterstützt. Dadurch kann die gewünschte Form schon bei geringeren Biegetemperaturen und in kürzerer Zeit erreicht werden. Durch die Aufteilung des Holhraums in Teilräume 5.1, 5.2, 5.3 wird eine inhomogene Druckverteilung auf der Oberfläche O erzeugt: im Bereich der Ecken der Glasscheibe I ist der Überdruck größer (beispielsweise 20 mbar) als im Zentralbereich (beispielsweise 8 mbar). Die Ecken können daher schneller und stärker gebogen werden.

Das Kontaktieren des oberen Formgebungswerkzeugs 3 mit der Glasscheibe 1 erfolgt über die Dichtlippe 7, was zu einem effektiven Verschluss des Hohlraums führt, so dass ein vorteilhaft hoher Überdruck erzeugt werden kann. Dadurch, dass die Glasscheibe I mit der flexiblen Dichtlippe 7 berührt wird statt der starren, metallenen Abdeckung des Formgebungswerkzeugs 3, können Beschädigungen oder eine Herabsetzung der optischen Qualität der Glasscheibe 1 vermieden werden. Der vertikale Randabschnitt 4 der Abdeckung 8 und die Dichtlippe 7 sind vollständig oberhalb der Glasscheibe 1 angeordnet. Der Randabschnitt 4 ist somit beim Biegen auf die Oberfläche O gerichtet. Da die durch das obere Formgebungswerkzeug 3 erzeugte Anpresskraft direkt auf die Oberfläche O wirkt, wird eine effiziente Abdichtung des Hohlraums erreicht und es kann ein hoher Überdruck erzeugt werden.

Die Schwerkraftbiegeform 1 ist Teil eines mehrteiligen Biegewerkzeugs, welches außer der Schwerkraftbiegeform 1 eine zweite untere Form 13 aufweist. Die zweite untere Form 13 ist für einen weiteren Schwerkraftbiegeschritt vorgesehen, der auf das erfindungsgemäße überdruckunterstützte Schwerkraftbiegen folgt. Die Schwerkraftbiegeform 1 dient der ersten Vorbiegung der Glasscheibe I, während die zweite untere Form 13 für eine weitere, stärkere Biegung vorgesehen ist. Die zweite untere Form 13 hat ebenfalls eine rahmenartige, konkave Auflagefläche, aber mit einer anderen Krümmung als die Auflagefläche 2 der Schwerkraftbiegeform 1. Die zweite untere Form 13 ist innerhalb der Schwerkraftbiegeform 1 angeordnet, welche die zweite untere Form 13 umrahmt. Die Schwerkraftbiegeform 1 und die zweite untere Form 13 sind vertikal gegeneinander bewegbar. Zunächst ist die Schwerkraftbiegeform 1 oberhalb der zweiten unteren Form 13 angeordnet, so dass die Glasscheibe I auf der Auflagefläche 2 aufliegt. Nach abgeschlossener Schwerkraftbiegung wird die Schwerkraftbiegeform 1 vertikal nach unten bewegt unterhalb die zweite untere Form 13. Dadurch wird die Glasscheibe I von der Schwerkraftbiegeform 1 auf die zweite untere Form 13 übergeben (Fig. 3c). Da die Krümmung der Glasscheibe I in diesem Moment noch nicht der Krümmung der Auflagefläche der zweiten unteren Form 13 entspricht, liegt die Glasscheibe I zunächst nur punktuell auf, typischerweise im Bereich der Scheibenecken. Dies kann zu einer unterwünschten Gegenbiegung (*counter bending*) führen - die Glasscheibe I wird an den Auflagepunkten gleichsam nach oben gedrückt, wodurch im Extremfall lokal sogar eine konvexe Biegung der oberen Oberfläche O erzeugt wird. Durch die stärkere Biegung der Eckbereiche im vorangegangenen Schwerkraftbiegeschritt kann dieser Effekt kompensiert werden. Die betroffenen Bereiche der Glasscheibe I werden überbogen, das Gegenbiegen kompensiert die Überbiegung, was in der eigentlich gewünschten Scheibenform resultiert. Durch das erfindungsgemäße Verfahren lassen sich sehr komplexe Scheibenformen realisieren.

Das Biegeverfahren ist beispielhaft anhand einer einzigen Glasscheibe I dargestellt. Es kann aber auch an zwei aufeinanderliegenden Glasscheiben durchgeführt werden, die gemeinsam kongruent gebogen werden. Dies ist besonders vorteilhaft, wenn die beiden Glasscheiben im Anschluss zu einer Verbundglasscheibe laminiert werden sollen.

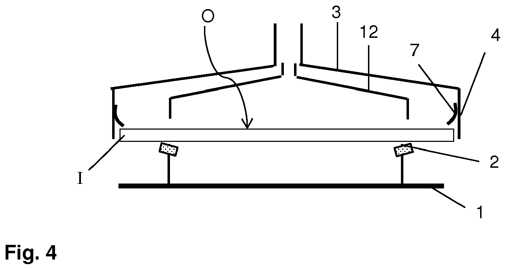

Figur 4 zeigt eine weitere Ausgestaltung des erfindungsgemäßen oberen Formgebungswerkzeugs 3 während des erfindungsgemäßen Verfahrens. Auch hier weist die Abdeckung 8 einen vertikal verlaufenden Randabschnitt 4 auf. Das Formgebungswerkzeug 3 ist aber größer ausgebildet, so dass der vertikale Randabschnitt 4 die Glasscheibe 1 umgibt und die Glasscheibe I dadurch im Hohlraum angeordnet ist. Die optionale Dichtlippe 7 erstreckt sich von dem Randabschnitt auf die Oberfläche O der Glasscheibe I.

Diese Ausgestaltung hat den Vorteil, dass das obere Formgebungswerkzeug 3 nicht spezifisch für einen bestimmten Scheibentyp gefertigt werden muss. Stattdessen können auch Glasscheiben I unterschiedlicher Größe mit demselben Formgebungswerkzeug 3 gebogen werden.

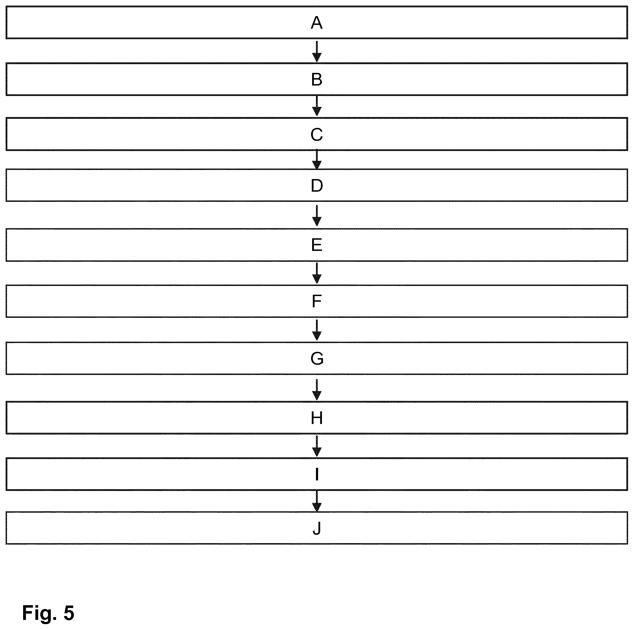

Figur 5 zeigt ein Ausführungsbeispiel des erfindungsgemäßen Verfahrens anhand eines Flussdiagramms. Auf das in Figur 3 dargestellte Schwerkraftbiegen und die Übergabe auf die zweite untere Form 13 folgt ein weiteres Erwärmen der Glasscheibe I und ein weiterer Schwerkraftbiegeschritt auf der zweiten unteren Form 13.

Es bedeuten:
A Auflegen einer Glasscheibe I auf die Auflagefläche 2 einer Schwerkraftbiegeform 1 als Teil eines mehrteiligen Biegewerkzeugs, das außer der Schwerkraftbiegeform 1 eine dieses umgebende rahmenartige zweite untere Form 13 umfasst, deren Auflagefläche im Ausgangszustand unterhalb der Auflagefläche 2 angeordnet ist
B Erwärmen der Glasscheibe 1 auf Biegetemperatur
C Absenken eines erfindungsgemäßen oberen Formgebungswerkzeugs 3 auf die von der Schwerkraftbiegeform 1 abgewandte Oberfläche O der Glasscheibe I
D Einströmen von Luft in die Teilräume 5.1, 5.2, 5.3 des Formgebungswerkzeugs 3 zur Erzeugung eines Überdrucks auf der Oberfläche O, wobei die Ecken der Glasscheibe I mit einem größeren Überdruck beaufschlagt werden als der Zentralbereich der Glasscheibe I
E Warten bis gewünschte Form der Glasscheibe I erreicht ist
F Anheben des Formgebungswerkzeugs 3
G Vertikalbewegung der Schwerkraftbiegeform 1 nach unten, so dass die Glasscheibe I von der Schwerkraftbiegeform 1 auf die Auflagefläche der zweiten unteren Form 13 übergeben wird
H Erwärmen der Glasscheibe I
I Schwerkraftbiegen der Glasscheibe 1 auf der zweiten unteren Form 13
J Abkühlen der Glasscheibe I

An das Schwerkraftbiegen kann sich eine weiterer Biegeschritt anschließen, beispielsweise ein Pressbiegeschritt gemäß EP 1836136 B1.

### Beispiel

In einer Versuchsreihe wurde herkömmliches Schwerkraftbiegen mit dem erfindungsgemäßen überdruckunterstützten Schwerkraftbiegen mit inhomogener Druckverteilung verglichen. Es wurde das Ausmaß des sogenannten Gegenbiegens (*counter bending*) untersucht, nachdem die Glasscheibe I von der Schwerkraftbiegeform 1 auf die zweite untere Form 13 übergeben worden war. Dieser Effekt wurde vorstehend im Zusammenhang mit der Zeichnung erläutert. Beim erfindungsgemäßen Verfahren wurde dem Gegenbiegen durch einen höheren Überdruck in den Eckbereichen der Glasscheibe I begegnet.

Die mittleren gemessenen Gegenbiegungen sind in Tabelle 1 zusammengefasst.

**Tabelle 1**

| | Biegeprozess | Gegenbiegung |
|---|---|---|
| 1 | Herkömmliches Schwerkraftbiegen | 0,7 mm |
| 2 | Schwerkraftbiegen mit oberem Formgebungswerkzeug 3 | 0,1 mm |

Wie der Tabelle zu entnehmen ist, wird die unerwünschte Gegenbiegung durch das erfindungsgemäße Verfahren mit der erfindungsgemäßen Vorrichtung wirksam reduziert. Zudem wird durch die Überdruckunterstützung das Schwerkraftbiegen in geringerer Zeit abgeschlossen und ist bei geringeren Temperaturen möglich. Das sind große Vorteile der vorliegenden Erfindung.

### Bezugszeichenliste:

- (1): Schwerkraftbiegeform
- (2): Auflagefläche der Schwerkraftbiegeform 1

- (3): oberes Formgebungswerkzeug
- (4): Randabschnitt des Formgebungswerkzeugs 3
- (5.1): erster Teilraum des Hohlraums des Formgebungswerkzeugs 3
- (5.2): zweiter Teilraum des Hohlraums des Formgebungswerkzeugs 3
- (5.3): dritter Teilraum des Hohlraums des Formgebungswerkzeugs 3
- (6): Gaszuleitung des Formgebungswerkzeugs 3 (Einströmrohr)
- (7): Dichtlippe des Formgebungswerkzeugs 3
- (8): Abdeckung des Formgebungswerkzeugs 3
- (9): Filz/Vlies der Dichtlippe 7
- (10): Band der Dichtlippe 7
- (11): Prallblech des Formgebungswerkzeugs 3
- (12): Trennwand im Hohlraum des Formgebungswerkzeugs 3
- (13): zweite untere Form

- (I): Glasscheibe
- (O): obere Oberfläche der Glasscheibe I, von der Auflagefläche 2 abgewandt

- (Z): vergrößerter Abschnitt des Formgebungswerkzeugs 3

## Patentansprüche

1. Vorrichtung zum Biegen von mindestens einer Glasscheibe (I), mindestens umfassend
- eine Schwerkraftbiegeform (1) mit einer Auflagefläche (2), die dazu geeignet ist, mindestens eine Glasscheibe (I) darauf anzuordnen,
- ein oberes Formgebungswerkzeug (3) gegenüberliegend der Auflagefläche (2) angeordnet, das dazu geeignet ist, einen Überdruck auf der von der Auflagefläche (2) abgewandten Oberfläche (O) der auf der Auflagefläche (2) angeordneten mindestens einen Glasscheibe (I) zu erzeugen,
wobei das Formgebungswerkzeug (3) eine Abdeckung (8) aufweist, welche einen in Richtung der Schwerkraftbiegeform (1) geöffneten Hohlraum ausbildet, und mit Mitteln ausgestattet ist, ein Gas in den Hohlraum einzuleiten, um den Überdruck zu erzeugen, und wobei der Hohlraum durch mindestens eine Trennwand (12) in mindestens zwei Teilräume (5.1, 5.2) unterteilt ist, so dass in mindestens zwei Bereichen der Oberfläche (O) ein unterschiedlicher Druck erzeugt werden kann,
und wobei das Formgebungswerkzeug (3) mit einer gemeinsamen Gaszuleitung (6) ausgestattet ist, bis zu der sich die Trennwand (12) erstreckt.

2. Vorrichtung nach Anspruch 1, wobei die mindestens eine Trennwand (12)
- den Querschnitt der Gaszuleitung (6) in mindestens einen ersten Zuleitungsteilquerschnitt und eine zweiten Zuleitungsteilquerschnitt unterteilt, wobei Gas im ersten Teilquerschnitt in den ersten Teilraum (5.1) und Gas im zweiten Teilquerschnitt in den zweiten Teilraum (5.2) geleitet wird, und
- den Gasaustrittsquerschnitt des Hohlraums in mindestens einen ersten Austrittsteilquerschnitt und eine zweiten Austrittsteilquerschnitt unterteilt, wobei Gas aus dem ersten Teilraum (5.1) durch den ersten Austrittsteilquerschnitt und Gas aus dem zweiten Teilraum (5.2) durch den zweiten Austrittsteilquerschnitt geleitet wird, wobei das Verhältnis vom ersten Zuleitungsteilquerschnitt zum zweiten Zuleitungsteilquerschnitt unterschiedlich ist vom Verhältnis vom ersten Austrittsteilquerschnitt zum zweiten Austrittsteilquerschnitt.

3. Vorrichtung nach Anspruch 1 oder 2, wobei die mindestens eine Trennwand (12) so angeordnet ist, dass im Bereich mindestens einer Ecke der Glasscheibe (I) ein höherer Druck erzeugt wird als im Zentralbereich der Glasscheibe (I).

4. Vorrichtung nach einem der Ansprüche 1 bis 3, wobei die Schwerkraftbiegeform (1) eine rahmenartige, konkave Auflagefläche (2) aufweist.

5. Vorrichtung nach einem der Ansprüche 1 bis 4, wobei die Schwerkraftbiegeform (1) vertikal gegenüber einer zweiten unteren Form (13) bewegt werden kann, um die Glasscheibe (I) zwischen der Schwerkraftbiegeform (1) und der zweiten unteren Form (13) zu übergeben.

6. Vorrichtung nach einem der Ansprüche 1 bis 5, wobei das Formgebungswerkzeug (3) mit einer auf einem Randabschnitt (4) der Abdeckung (8) angeordneten Dichtlippe (7) ausgestattet ist zur Kontaktierung mit der von der Auflagefläche (2) abgewandten Oberfläche (O) der mindestens einen Glasscheibe (I).

7. Vorrichtung nach Anspruch 6, wobei die Dichtlippe (7) aus einem metallhaltigen Filz oder Vlies (9) gefertigt ist mit einem darin angeordneten Band (10) enthaltend Glasfasern und/oder Metallfasern.

8. Vorrichtung nach einem der Ansprüche 1 bis 7, wobei der Randabschnitt (4) nach unten gerichtet ist und bevorzugt im Wesentlichen vertikal angeordnet ist.

9. Vorrichtung nach einem der Ansprüche 1 bis 8, wobei die Abdeckung (8) eine Materialstärke von höchstens 5 mm aufweist.

10. Verfahren zum Biegen mindestens einer Glasscheibe (I), mindestens umfassend die folgenden Verfahrensschritte:
(a) Anordnen mindestens einer Glasscheibe (I) auf einer Auflagefläche (2) einer Schwerkraftbiegeform (1),
(b) Erwärmen der Glasscheibe (I) auf mindestens ihre Erweichungstemperatur,
(c) Erzeugen eines Überdrucks auf der von der Auflagefläche (2) abgewandten Oberfläche (O) der mindestens einen Glasscheibe (I) mittels eines oberes Formgebungswerkzeugs (3), das eine Abdeckung (8) aufweist, welche einen in Richtung der Schwerkraftbiegeform (1) geöffneten Hohlraum ausbildet, wobei der Überdruck erzeugt wird, indem ein Gas in den Hohlraum eingeleitet wird, wobei der Hohlraum durch mindestens eine Trennwand (12) in mindestens zwei Teilräume (5.1, 5.2) unterteilt ist, welche sich bis zu einer gemeinsamen Gaszuleitung (6) des Formgebungswerkzeug (3) erstreckt, so dass in mindestens zwei Bereichen der Oberfläche (O) ein unterschiedlicher Druck erzeugt wird, und
(d) Abkühlen der Glasscheibe (I).

11. Verfahren nach Anspruch 10, wobei in einem ersten Bereich der Oberfläche (O) ein Druck von 0 mbar bis 15 mbar erzeugt wird, bevorzugt von 2 mbar bis 10 mbar, und wobei in einem zweiten Bereich der Oberfläche (O) ein Druck von 15 mbar bis 30 mbar erzeugt wird, bevorzugt von 20 mbar bis 25 mbar.

12. Verfahren nach Anspruch 11, wobei der erste Bereich der Oberfläche (O) die Scheibenmitte enthält und wobei der zweite Bereich der Oberfläche (O) mindestens eine Scheibenecke enthält.

13. Verfahren nach einem der Ansprüche 10 bis 12, wobei die Schwerkraftbiegeform (1) nach Verfahrensschritt (c) vertikal gegenüber einer zweiten unteren Form (13) nach unten bewegt wird, wobei die Glasscheibe (I) von der Schwerkraftbiegeform (1) auf die zweite untere Form (13) übergeben wird.

14. Verfahren nach Anspruch 13, wobei die Glasscheibe (I) anschließend auf der zweiten unteren Form (13) einer weiteren Schwerkraftbiegung unterzogen wird.

15. Verwendung eines oberen Formgebungswerkzeugs (3), das eine Abdeckung (8) aufweist, welche einen in Richtung der Schwerkraftbiegeform (1) geöffneten Hohlraum ausbildet, zur Unterstützung eines Schwerkraftbiegeprozesses, wobei mit dem Formgebungswerkzeug (3) ein Überdruck auf der von einer Schwerkraftbiegeform (1) abgewandten Oberfläche (O) einer zu biegenden Glasscheibe (I) erzeugt wird, indem ein Gas in den Hohlraum eingeleitet wird, wobei der Hohlraum durch mindestens eine Trennwand (12) in mindestens zwei Teilräume (5.1, 5.2) unterteilt ist, welche sich bis zu einer gemeinsamen Gaszuleitung (6) des Formgebungswerkzeug (3) erstreckt, so dass in mindestens zwei Bereichen der Oberfläche (O) ein unterschiedlicher Druck erzeugt wird.

## Claims

1. Device for bending at least one glass pane (I), at least comprising
- a gravity bending mould (1) with a supporting surface (2), which is suitable for arranging at least one glass pane (I) thereon,
- an upper shaping tool (3) arranged opposite the supporting surface (2), which upper shaping tool is suitable for producing an overpressure on the surface (O) of the at least one glass pane (I) arranged on the supporting surface (2), which surface (O) faces away from the supporting surface (2),
wherein the shaping tool (3) has a cover (8) that forms a hollow space open in the direction of the gravity bending mould (1) and is equipped with means for introducing a gas into the hollow space to produce the overpressure,
and wherein the hollow space is divided by at least one separating wall (12) into at least two subspaces (5.1, 5.2) such that a different pressure can be produced in at least two regions of the surface (O),
and wherein the shaping tool (3) is equipped with a common gas feed line (6), up to which the separating wall (12) extends.

2. Device according to claim 1, wherein the at least one separating wall (12)
- divides the cross-section of the gas feed line (6) into at least one first feed line sub-cross-section and one second feed line sub-cross-section, wherein gas is routed into the first subspace (5.1) in the first sub-cross-section and gas is routed into the second subspace (5.2) in the second sub-cross-section, and
- divides the gas outlet cross-section of the hollow space into at least one first outlet sub-cross-section and one second outlet sub-cross-section, wherein gas is routed out of the first subspace (5.1) through the first outlet sub-cross-section and gas is routed out of the second subspace (5.2) through the second outlet sub-cross-section,
wherein the ratio of the first feed line sub-cross-section to the second sub-cross-section is different from the ratio of the first outlet cross-section to the second outlet sub-cross-section.

3. Device according to claim 1 or 2, wherein the at least one separating wall (12) is arranged such that in the region of at least one corner of the glass pane (I), a higher pressure is produced than in the central region of the glass pane (I).

4. Device according to one of claims 1 through 3, wherein the gravity bending mould (1) has a frame-like, concave supporting surface (2).

5. Device according to one of claims 1 through 4, wherein the gravity bending mould (1) can be moved vertically relative to a second lower mould (13) in order to transfer the glass pane (I) between the gravity bending mould (1) and the second lower mould (13).

6. Device according to one of claims 1 through 5, wherein the shaping tool (3) is equipped with a sealing lip (7) arranged on an edge section (4) of the cover (8) for making contact with the surface (O) of the at least one glass pane (I) facing away from the supporting surface (2).

7. Device according to claim 6, wherein the sealing lip (7) is made of a metal-containing felt or fleece (9) with a belt (10) arranged therein containing glass fibres and/or metal fibres.

8. Device according to one of claims 1 through 7, wherein the edge section (4) is directed downward and is preferably arranged substantially vertically.

9. Device according to one of claims 1 through 8, wherein the cover (8) has a material thickness of at most 5 mm.

10. Method for bending at least one glass pane (I), at least comprising the following process steps:
(a) Arranging at least one glass pane (I) on a supporting surface (2) of a gravity bending mould (1),
(b) Heating the glass pane (I) to at least its softening temperature,
(c) Producing an overpressure on the surface (O) of the at least one glass pane (I) facing away from the supporting surface (2) using an upper shaping tool (3) that has a cover (8) that forms a hollow space open in the direction of the gravity bending mould (1), wherein the overpressure is produced by introducing a gas into the hollow space, wherein the hollow space is divided by at least one separating wall (12) into at least two subspaces (5.1, 5.2), which wall extends to a common gas feed line (6) of the shaping tool (3) such that a different pressure is produced in at least two regions of the surface (O), and
(d) Cooling of the glass pane (I).

11. Method according to claim 10, wherein in a first region of the surface (O), a pressure from 0 mbar to 15 mbar is produced, preferably from 2 mbar to 10 mbar, and wherein in a second region of the surface (O) a pressure from 15 mbar to 30 mbar is produced, preferably from 20 mbar to 25 mbar.

12. Method according to claim 11, wherein the first region of the surface (O) includes the pane centre and wherein the second region of the surface (O) includes at least one pane corner.

13. Method according to one of claims 10 through 12, wherein, after process step (c), the gravity bending mould (1) is moved downward vertically relative to a second lower mould (13), wherein the glass pane (I) is transferred from the gravity bending mould (1) onto the second lower mould (13).

14. Method according to claim 13, wherein the glass pane (I) is then subjected to further gravity bending on the second lower mould (13).

15. Use of an upper shaping tool (3) that has a cover (8) that forms a hollow space open in the direction of the gravity bending mould (1) for assisting a gravity bending process, wherein an overpressure is produced on the surface (O) of a glass pane (I) to be bent facing away from a gravity bending mould (1), by introducing a gas into the hollow space, wherein the hollow space is divided by at least one separating wall (12) into at least two subspaces (5.1, 5.2), which wall (12) extends all the way to a common gas feed line (6) of the shaping tool (3) such that a different pressure is produced in at least two regions of the surface (O).

## Revendications

1. Dispositif pour le bombage d'au moins une feuille de verre (I), comportant au moins
- une forme de bombage par gravité (1) comportant une surface de support (2) qui est appropriée pour disposer au moins une feuille de verre (I) sur celle-ci ;
- un outil de formage supérieur (3) disposé à l'opposé de la surface de support (2), qui est approprié pour générer une surpression sur la surface (O), tournée à l'opposé de la surface de support (2), de ladite au moins une feuille de verre (I) disposée sur la surface de support (2),
dans lequel l'outil de formage (3) présente un recouvrement (8), lequel forme un espace creux ouvert en direction de la forme de bombage par gravité (1), et est équipé de moyens pour introduire un gaz dans l'espace creux, afin de générer la surpression, et dans lequel l'espace creux est divisé en au moins deux sous-espaces (5.1, 5.2) par au moins une paroi de séparation (12), de telle sorte que, dans au moins deux régions de la surface (O), une pression différente peut être générée,
et dans lequel l'outil de formage (3) est équipé d'une conduite d'amenée de gaz commune (6), jusqu'à laquelle la paroi de séparation (12) s'étend.

2. Dispositif selon la revendication 1,
dans lequel ladite au moins une paroi de séparation (12) :
- divise la section transversale de la conduite d'amenée de gaz (6) en au moins une première sous-section transversale de conduite d'amenée et une seconde sous-section transversale de conduite d'amenée, du gaz étant conduit dans le premier sous-espace (5.1) dans la première sous-section transversale et du gaz étant conduit dans le second sous-espace (5.2) dans la seconde sous-section transversale ; et
- divise la section transversale de sortie de gaz de l'espace creux en au moins une première sous-section transversale de sortie et une seconde sous-section transversale de sortie, du gaz étant conduit hors du premier sous-espace (5.1) par la première sous-section transversale de sortie et du gaz étant conduit hors du second sous-espace (5.2) par la seconde sous-section transversale de sortie,
dans lequel le rapport de la première sous-section transversale de conduite d'amenée à la seconde sous-section transversale de conduite d'amenée est différent du rapport de la première sous-section transversale de sortie à la seconde sous-section transversale de sortie.

3. Dispositif selon l'une des revendications 1 ou 2, dans lequel ladite au moins une paroi de séparation (12) est disposée de telle sorte que, dans la région d'au moins un angle de la feuille de verre (I), une pression est générée qui est plus élevée que dans la région centrale de la feuille de verre (I).

4. Dispositif selon l'une des revendications 1 à 3, dans lequel la forme de bombage par gravité (1) présente une surface de support (2) concave, en forme de cadre.

5. Dispositif selon l'une des revendications 1 à 4, dans lequel la forme de bombage par gravité (1) peut être déplacée verticalement par rapport à une seconde forme inférieure (13), afin de transférer la feuille de verre (I) entre la forme de bombage par gravité (1) et la seconde forme inférieure (13).

6. Dispositif selon l'une des revendications 1 à 5, dans lequel l'outil de formage (3) est équipé d'une lèvre d'étanchéité (7) disposée sur une section de bordure (4) du recouvrement (8) pour la mise en contact avec la surface (O), tournée à l'opposé de la surface de support (2), de ladite au moins une feuille de verre (I).

7. Dispositif selon la revendication 6, dans lequel la lèvre d'étanchéité (7) est réalisée à partir d'un feutre ou d'un non-tissé à teneur en métal (9) comprenant une bande (10) disposée dans celui-ci contenant des fibres de verre et/ou des fibres métalliques.

8. Dispositif selon l'une des revendications 1 à 7, dans lequel la section de bordure (4) est dirigée vers le bas et est disposée de préférence sensiblement verticalement.

9. Dispositif selon l'une des revendications 1 à 8, dans lequel le recouvrement (8) présente une épaisseur de matière d'au plus 5 mm.

10. Procédé pour le bombage d'au moins une feuille de verre (I), comportant au moins les étapes de procédé suivantes :
(a) disposer au moins une feuille de verre (I) sur une surface de support (2) d'une forme de bombage par gravité (1) ;
(b) chauffer la feuille de verre (I) à au moins sa température de ramollissement ;
(c) générer une surpression sur la surface (O), tournée à l'opposé de la surface de support (2), de ladite au moins une feuille de verre (I) au moyen d'un outil de formage supérieur (3), qui présente un recouvrement (8), lequel forme un espace creux ouvert en direction de la forme de bombage par gravité (1), la surpression étant générée par le fait qu'un gaz est introduit dans l'espace creux, l'espace creux étant divisé en au moins deux sous-espaces (5.1, 5.2) par au moins une paroi de séparation (12), laquelle s'étend jusqu'à une conduite d'amenée de gaz commune (6) de l'outil de formage (3), de telle sorte que, dans au moins deux régions de la surface (O), une pression différente est générée, et
(d) refroidir la feuille de verre (I).

11. Procédé selon la revendication 10, dans lequel, dans une première région de la surface (O), une pression de 0 mbar à 15 mbar est générée, de préférence de 2 mbar à 10 mbar, et dans lequel, dans une seconde région de la surface (O), une pression de 15 mbar à 30 mbar est générée, de préférence de 20 mbar à 25 mbar.

12. Procédé selon la revendication 11, dans lequel la première région de la surface (O) contient le centre de la feuille et dans lequel la seconde région de la surface (O) contient au moins un angle de la feuille.

13. Procédé selon l'une des revendications 10 à 12, dans lequel la forme de bombage par gravité (1) est déplacée vers le bas après l'étape de procédé (c) verticalement par rapport à une seconde forme inférieure(13), la feuille de verre (I) étant transférée de la forme de bombage par gravité (1) sur la seconde forme inférieure (13).

14. Procédé selon la revendication 13, dans lequel la feuille de verre (I) est soumise ultérieurement à un autre bombage par gravité sur la seconde forme inférieure (13).

15. Utilisation d'un outil de formage supérieur (3), qui présence un recouvrement (8), lequel forme un espace creux ouvert en direction de la forme de bombage par gravité (1), pour assister un procédé de bombage par gravité, où, avec l'outil de formage (3), une surpression est générée sur la surface (O), tournée à l'opposé d'une forme de bombage par gravité (1), d'une feuille de verre (I) à bomber par le fait qu'un gaz est introduit dans l'espace creux, l'espace creux étant divisé en au moins deux sous-espaces (5.1, 5.2) par au moins une paroi de séparation (12), laquelle s'étend jusqu'à une conduite d'amenée de gaz commune (6) de l'outil de formage (3) de telle sorte que, dans au moins deux régions de la surface (O), une pression différente est générée.
